# EUROPEAN PATENT APPLICATION

(11) **EP 2 183 977 A1**
(43) Date of publication of application: **12.05.2010**
(21) Application number: 08168460.7
(22) Date of filing: 06.11.2008
(51) Int. Cl.: A23D 7/005, A23D 7/02

(54) **Food product**

(71) Applicant: Unilever N.V., 3013 AL Rotterdam (NL)
(72) Inventor: The designation of the inventor has not yet been filed
(74) Representative: Corsten, Michael Allan

(57) **Abstract**

A method for the preparation of a water in oil spread comprising 20-85 wt% of fat and 0.01 to 5 wt% of a bioflavonoid composition, comprising the steps of
(a) preparing a fat phase;
(b) preparing a water phase;
Whereby the fat phase and the water phase are substantially free from bioflavonoids;
(c)preparing a oil in water emulsion by combining the water phase and the fat phase to form and oil and water emulsion, optionally followed by inverting said emulsion to form a water in oil emulsion;
(d) post-dosing a bioflavonoid composition to said water in oil emulsion to form a water in oil spread comprising 20-85 wt% vegetable fat and 0.01 to 5 wt% bioflavonoids.

## Description

### Field of the invention

The invention relates to a method to prepare a food product comprising one or more bioflavonoids.

### Background to the invention

Food products have previously been suggested as vehicles for incorporation of healthy ingredients, such as blood-cholesterol lowering ingredients e.g. like sterols, blood-pressure lowering ingredients, for example peptides, long-chain poly unsaturated fatty acids (LC-PUFA) from fish-oil, poly phenols, anti-oxidants and many more.

It has been suggested in WO 00/15174 to incorporate bioflavonoids in foods and beverage compositions.

PL 189 944 B1 suggests the incorporation of bioflavonoids in margarine type products.

It is an object of the invention to manufacture spreads such as margarine or low fat margarine type products which comprise bioflavonoid ingredients at a level potentially suitable to alter the lipid profile in the blood of consumers, in particular to reduce the cholesterol level in the blood of consumers. In particular it is an object of the present invention to manufacture spreads in the form of water and oil emulsions, particularly in the form of water in oil emulsions which comprise bioflavonoid ingredients.

The incorporation of bioflavonoids, particularly citrus bioflavonoids, in food compositions however encounters a number of problems. For example often commercially available citrus bioflavonoid compositions cannot readily be used in food products because these often provide an undesired bitter taste to the product.

Additionally the incorporation of such bioflavonoids in food products often is difficult to achieve because the bioflavonoids often seem to have a negative influence on the product characteristics, for example a negative impact on taste or negative impact on mouthfeel. Furthermore applicants have encountered problems to stably and or homogeneously incorporate bioflavonoid into food structures because they lead to more complicated manufacturing processes and to a negative impact on product stability.

A first object of the invention is to provide a process to prepare a spread comprising a bioflavonoid composition, particularly a citrus bioflavonoid composition, which can overcome one or more of the above problems. Another object of the invention is to define an easily measurable parameter, which can serve to distinguish suitable spreads comprising bioflavonoid compositions from less suitable spreads comprising bioflavonoid compositions.

Another object of the invention is to provide a food product which is stable under storage at ambient and optionally higher temperatures. Further food products with good organoleptic and/or visual properties are envisioned with the current invention.

PL 189 944 describes (abstract) the preparation of water/oil emulsions comprising specific bioflavonoids by dissolving the bioflavonoids in the water phase prior to the emulsification process.

Surprisingly it has been found that the taste of a spread comprising a bioflavonoid composition can markedly be improved if the spread is manufactured by a specific process. Additionally it has been found that bioflavonoid containing spreads of acceptable taste are characterised by a specific easily measurable parameter which can readily be used to distinguish between products of acceptable quality and products of less acceptable quality.

In particular it has been found that the post-dosing of bioflavonoids during the spreads manufacturing process provides spreads of improved quality and/or improved stability. Although applicants by no way wish to be bound by any theory it is believed that Spreads obtainable by this process are generally distinct by having a specific distribution of the bioflavonoids over the spread. In particular it is hypothesized that this different distribution of the bioflavonoids over the product leads to a reduced solubilisation of the bioflavonoids into the water phase, therewith resulting in specific improved taste characteristics and/or to an improved stability of the product.

In a first aspect the invention relates to a method for the preparation of a water in oil spread comprising 20-85 wt% of fat and 0.01 to 5 wt% of a bioflavonoid composition, comprising the steps of
(a) preparing a fat phase;
(b) preparing a water phase ;
   Whereby the fat phase and the water phase are substantially free from bioflavonoids;
(c)preparing a oil and water emulsion by combining the water phase and the fat phase to form and oil and water emulsion, optionally followed by inverting said emulsion to form a water in oil emulsion;
(d) post-dosing a bioflavonoid composition to said water in oil emulsion to form a water in oil spread comprising 20-85 wt% fat and 0.01 to 5 wt% bioflavonoids.

Generally the preparation of the water phase and the fat phase and the water in oil emulsion according to the invention can be done by traditional spreads production methods. Such methods are well-known in the art.

The post-dosing of the bioflavonoid composition can advantageously be done by the mixing of a bioflavonoid composition into the water and oil emulsion obtained after step c). Advantageously such bioflavonoid composition is a concentrated bioflavonoid composition comprising at least 5 wt% of bioflavonoids, particularly at least 5 wt% of poly methoxylated flavones. Such high concentration can for example be obtained by adding the bioflavonoids in solid form, in solubilised from (for example as a concentrated mixture of bioflavonoids and a carrier material) or in encapsulated form. Particularly preferred is the addition of the bioflavonoids in the form of a mixture of at least 5 wt% bioflavonoids in an oil matrix.

Preferably the bioflavonoid composition is a citrus bioflavonoid composition, for example obtainable by extracting citrus peels.

For the purpose of the invention the term substantially free of bioflavonoids as referred to in the above process refers to a water phase and a fat phase which are either free from bioflavonoids or wherein some small amounts of bioflavonoids may be present, e.g. as naturally present ingredients of the ingredients of the fat phase or the water phase, but no added amounts of bioflavonoids over such accidental natural amounts are present.

Preferred ways of carrying out the method of the invention are described in the Examples.

In a further aspect of the invention it has been found that the bioflavonoid absorption profile can advantageously be used to determine whether the spreads obtainable by the process of the invention have the desired reduced bitterness.

Accordingly in a second aspect the present invention relates to a vegetable oil based spread in the form of a water in oil emulsion, said emulsion comprising:
(a) from 20 to 85 wt% of vegetable fat;
(b) from 0.01 to 5 wt% of bioflavonoids,
(c) wherein the standardised absorption factor at 335 nm and 35 C is less than 20%.

### Detailed description of the invention

Spreads of the invention have a standardised absorption factor at 335 nm and 35 C of less than 20%. Surprisingly it has been found that the standardised absorption factor at 335 nm -measured as described in the examples- is an easily measurable parameter to distinguish spreads which have been made by the process according to the invention from spreads which have been produced by a different process. Spreads according to the invention are generally characterised by an improved taste, particularly a less bitter taste and/or an improved stability, for example evidenced by a stable D _{3,3} particle size.

Bioflavonoids are natural components obtainable from, for example, fruits and vegetables. For the purpose of the invention bioflavonoids are preferably those bioflavonoids which can be obtained from citrus fruits for example by extraction of citrus peels. These bioflavonoids are for the purpose of the invention referred to as citrus bioflavonoids. Especially preferably the bioflavonoids for use in the invention are for more than 50 wt%, for example 70-100 wt%, such as 90-100 wt% polymethoxylated flavones.

Crude citrus bioflavonoid materials are commercially available for example via KGK or One Source Global.
Crude citrus bioflavonoid compositions often contain a mixture of flavonoid materials, such as for example one or more of hesperedin, naringin, tangeretin, nobiletin etc. Crude citrus bioflavonoid compositions generally have a brown or sometime green-grey colour. Examples of crude citrus bioflavonoid materials are for example Citrus Nobilis extract ex Superman Chendu and Citrus Aurantium from Fenchem.

Spreads of the inventions are vegetable oil based spreads of the water in oil type. Such spreads are for example used as low or full-fat margarine type product, for example for the flavouring of food products or the spreading on for example sandwiches and toasts. Vegetable oil based spreads may sometimes also be used for baking or frying purposes. In addition of water and vegetable oil spreads of the invention may comprise various ingredients and flavouring ingredients for example as described here below.

The spreads of the invention may optionally comprise thickeners. For stability reasons it may be useful to include thickeners in the emulsion, for example in low fat spreads containing 20 to 40 wt% of fats, often improve by addition of thickeners. Whether or not a thickener should be added and in what amount depends on factors as stability and application and may be determined by the skilled person.

Suitable thickeners may be any known thickener and are preferably selected from the group comprising gums, like xanthan, guar, and locust bean, carrageenan, polysaccharides, alginate, pectin, starch, and gelatin. The level of thickener in compositions of the invention, preferably is from 0.1 to 5 wt%.

In preferred spread products according to the invention, the aqueous phase comprises a fully gelatinised starch selected from any of the main starch groups: wheat, potato, rice, maize, waxy rice or waxy maize.

The amount of starch in the food product according to the invention depends somewhat on the type of chosen starch and is preferably from 0.2 to 5 wt%, more preferred from 0.7 to 3 wt%, most preferred from 1 to 2 wt%.

To ensure homogeneous distribution of the aqueous phase in the continuous fat phase, the droplet size distribution D_{3,3} of the dispersed aqueous phase is preferably less than 8 µm, more preferably from 4 to 20 µm, more preferred even lower than 10 µm. It will be appreciated that the droplet size can be controlled by adjusting the processing conditions in the unit operations: e.g. higher rotational speed in a scraped surface heat exchanger will produce correspondingly smaller water droplet size distributions.

The spreads according to the invention comprise from 20 to 85 wt% of a vegetable fat, preferably from 30 to 80 wt%, most preferably from 35 to 60 wt%.

The fat can be a single fat or a combination of vegetable fats. The fat or combination of fats is preferably selected such that the solid fat content is below 6 % at 35°C, preferably below 5% at 35°C, more preferred below 4% at 35°C, most preferred from 2 to 4% at 35°C. Optionally relatively small amounts of non-vegetable fats, for example animal fats such as butter or marine oils, for example at levels of 0.1 to 25 wt%, more preferred 0.1 to 5 wt% may advantageously be present in the spreads of the invention.

Suitable vegetable fats can for example be selected from the group comprising bean oil, sunflower oil, palm kernel oil, coconut oil, palm oil, rapeseed oil, cotton seed oil, maize oil, or their fractions, or a combination thereof. Inter esterified fat blends of these fats or optionally with other fats are also encompassed in the invention.

Advantageously, marine oils such as fish oil and or algae oil may be added for the addition of omega-3 and omega-6 fatty acids.

Spreads according to the invention comprise from 0.01 to 5 wt% of the bioflavonoids preferably selected from Tangeretin and Nobiletin or mixtures thereof.

Preferably the total level of bioflavonoids, particularly citrus flavonoids is from 0.1 to 4 wt%, most preferred from 0.2 to 2 wt%.
Preferably the (citrus) bioflavonoids are largely composed of tangeretin or nobiletin or mixtures thereof in the preferred total amounts for the combination of these ingredients as specified above. Especially preferred is the use of nobiletin at a level of from 0.2 to 2 wt%.

Preferably spreads according to the invention comprise an emulsifier such as polyglycerol polyricinoleate, distilled monoglycerides, citric acid esters of monoglycerides, diacetyl acetic acid esters of monoglycerides, lactic acid esters of monoglyceride, mono-diglycerides, polyglycerol esters of fatty acids or sorbitan esters of fatty acids. The amount of emulsifier may advantageously be from 0.05 to 2 wt%, particularly 0.1 to 1.0 wt%. Particularly preferred is the use of polyglycerol polyricinoleate, for example Admul Wol (ex Kerry) at a level of from 0.1 to 0.5 wt%.

The most preferred emulsifiers are polyglycerol polyricinoleate and monoglycerides.

The amount of emulsifier depends on the type and effectiveness of the emulsifier selected and can be determined by the person skilled in the art. As a general guidance the amount of emulsifier is preferably from 0.05 to 1.5 wt%, more preferred from 0.1 to 0.7 wt%, most preferred from 0.15 to 0.5 wt%.

The pH of the aqueous phase of the spread can be set to the desired value, among others to influence acidic or basic taste impression and to influence microbial stability. Preferably the pH of the aqueous phase in food products according to the invention is from 4.3 to 5.5.

Optionally some protein may be added to the spread according to the invention. Protein may be added to beneficially influence the taste, flavour and nutritional value of the food product and also may be added to increase browning of food stuff when the current composition is used as a medium for shallow frying. Generally the level of protein may for example be from 0.1 to 10 wt%.

The spreads according to the invention optionally contain other ingredients such as preservatives, vitamins, taste and flavour components, colorants such as beta-carotene, anti-oxidants.

The food product according to the invention can be prepared by any suitable process to prepare such products.

For example the preparation of a food product according to the invention comprises the preparation of an aqueous phase prepared comprising starch and water and other water soluble ingredients, which aqueous phase is heated to a temperature from 60 to 95 °C for at least 15 minutes to gelatinise the starch such that at least 50% is gelatinised, and subsequently cooled to a temperature of from 50 to 70 °C, and separately a fat phase is prepared comprising fat phase ingredients at a temperature of around 60°C and in a further step the aqueous phase and the fat phase are mixed at a temperature around 60°C.

Spreads of the invention can be used to lower the level of serum cholesterol. Preferably this use involves the use of 5-50 g, more preferred 10-25 g of spread per day, for example in the form of 1-10 slices of bread, for example 1-5 slices each slice comprising on average 5 g of the spread.

### Method to determine D₃,₃

The water droplet size can be measured using a well known low resolution NMR measurement method. Reference is made to Alderliesten, M.; Part.Part. Syst. Charact. 8 (1991), 237-241.

### Method to determine solid fat content

The solid fat content can be measured by a suitable analytical method such as NMR. The method used is low resolution NMR with Bruker Minispec apparatus. Reference is made to the Bruker minispec application notes 4,5 and 6.

The percentage of solid fat determined by the low resolution NMR technique is defined as the ratio of the response obtained from the hydrogen nuclei in the solid phase and the response arising from all the hydrogen nuclei in the sample. The product of this ratio and one hundred is termed the low resolution NMR solids percent. No correction is made for variations in the proton density between solid and liquid phase. The NMR solids percent for a sample measured at t °C was given the symbol Nₜ.

Suitable instruments adapted to determine the solids fat content are the Bruker Minispecs p20i^{tm}, pc20^{tm}, pc120^{tm}, pc120s^{tm}, NMS120^{tm} and MQ20^{tm}.

Stabilization and tempering procedure was as follows:
- melt fat at 80 °C
- 5 minutes at 60 °C
- 60 minutes at 0 °C
- 30-35 minutes at each chosen measuring temperature.

### Method to determine the standardised absorption factor at 335 nm

The standardised absorption factor generally involves
(1) the measurement of the absorption at 335 nm,
(2) comparing said absorption to the maximum absorption of an aqueous solution containing the same bioflavonoid level as the spread, and
(3) expressing the first figure as a percentage of the second figure.

The measurement (1) is done by heating 100 g of demi-water to 25 C and adding 1 g of spread to the water under stirring at 750 rpm. The sample is heated to 44 C at a rate of about 1.4 degree per minute. At various temperatures a sample of 2 ml is taken. At 35 C a sample is taken and the the absorption at 335 nm is measured in a Shimadzu UV-Vis recording spectrometer type 2501PC using a 1 cm quartz cell.

The measurement (2) is done by preparing an aqueous solution comprising per 100 ml the same total amount of bioflavonoids as the 100 ml/ 1 gr spread solution as used under 1 (i.e a 1% containing isoflavonoid spread, when used at 1 gr/100 ml corresponds to 10 mg of isoflavonoid in the reference solution as used under 2) and measuring the absorption at 335 nm and 35 C in a Shimadzu UV-Vis recording spectrometer type 2501PC using a 1 cm quartz cell.

The calculation 3) is done whereby the absorption measured under (1) is expressed as a percentage of the absorption measured under (2). The resulting percentage is the standardised absorption at 335 nm and 35 C.

### Example I

vegetable oil based spread was prepared with the following composition (parts by weight)

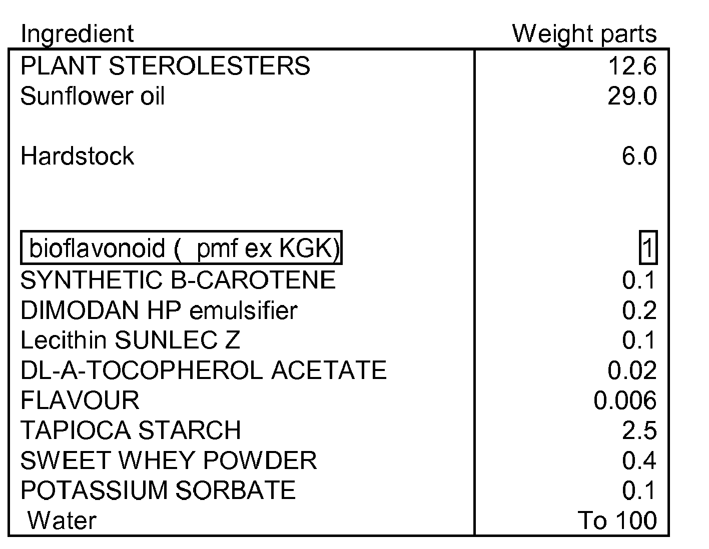

### Notes:

Plant sterol esters: Sitosterol ester of tall oil sterols esterified with sunflower oil.
Sunflower oil
Hardstock: Interesterified blend of palm oil mid fraction (PO58) (65 weight parts) and palm kernel oil (35 weight parts).

The spread was prepared as follows:
1. A 10 wt% concentrate of 1 part bioflavonoid in 9 parts sunflower oil was prepared.
2. the remaining fats, hardstocks, sterolesters, bioflavonoid, beta carotene, emulsifier, lecithin, tocopherol and flavour were premixed to form a fat phase, substantially free of bioflavonoids.
3. The remaining ingredients were mixed to form a water-phase, substantially free of bioflavonoids.
The water phase was mixed with the fat phase to form a oil in water which was kept for 30 minutes at 62°C and which was subsequently cooled and inverted into a water in oil emulsion by passing through 3 subsequent A units, followed by one C unit. Subsequently the bioflavonoid/ oil mixture was post-dosed into the product by addition followed by gentle mixing. The products were filled into tubs and stored at 5°C.

As a comparison the same spread was prepared whereby bioflavonoid materials were added as part of the water phase. The spread with the post-dosed bioflavonoids had a markedly improved tase (less bitter).

The standardised absorption at 335 nm and 35 C was determined for the post-dosed product of the invention and for the comparative example. The comparative product resulted in a standardised absorption at 35 C of about 37%, the post-dosed product in accordance to the invention had an standardised absorption factor at 35 C of about 11%.

## Claims

1. A method for the preparation of a water in oil spread comprising 20-85 wt% of fat and 0.01 to 5 wt% of a bioflavonoid composition, comprising the steps of
(a) preparing a fat phase;
(b) preparing a water phase;
Whereby the fat phase and the water phase are substantially free from bioflavonoids;
(c)preparing a oil in water emulsion by combining the water phase and the fat phase to form and oil and water emulsion, optionally followed by inverting said emulsion to form a water in oil emulsion;
(d) post-dosing a bioflavonoid composition to said water in oil emulsion to form a water in oil spread comprising 20-85 wt% vegetable fat and 0.01 to 5 wt% bioflavonoids.

2. A method according to claim 1, wherein the bioflavonoid composition is a citrus bioflavonoid composition.

3. A method according to claim 1, wherein the bioflavonoid composition consists for more than 50 wt%, for example70-100 wt%, such as 90-100 wt% of polymethoxylated flavones.

4. A vegetable oil based spread in the form of a water in oil emulsion, said emulsion obtainable by the process of claim 1 comprising:
(a) from 20 to 85 wt% of vegetable fat;
(b) from 0.01 to 5 wt% of bioflavonoids.

5. A vegetable oil based spread in the form of a water in oil emulsion, said emulsion comprising:
a) from 20 to 85 wt% of vegetable fat;
b) from 0.01 to 5 wt% of bioflavonoids,
c) wherein the standardised absorption factor at 335 nm and 35 C is less than 20%.

6. A vegetable oil based spread according to claim 4 or 5 comprising 0.05 to 2 wt% of polyglycerol polyricinoleate.
